Europäisches Patentamt

European Patent Office

Office européen des brevets

(11) Publication number: **0 108 158**
**B1**

# (12) EUROPEAN PATENT SPECIFICATION

(45) Date of publication of patent specification: **24.02.88**

(51) Int. Cl.⁴: **G 03 B 27/73**, G 03 F 3/08

(21) Application number: **82110179.7**

(22) Date of filing: **04.11.82**

(54) Image display system.

(43) Date of publication of application:
**16.05.84 Bulletin 84/20**

(45) Publication of the grant of the patent:
**24.02.88 Bulletin 88/08**

(84) Designated Contracting States:
**CH DE FR GB LI**

(56) References cited:
**EP-A-0 054 848**
**WO-A-82/00902**
**DE-A-2 920 058**
**DE-A-3 013 455**
**GB-A-1 221 071**
**GB-A-2 072 361**
**US-A-4 097 892**
**US-A-4 364 084**

**Patent Abstracts of Japan vol. 5, no. 122, 7
August 1981**

(73) Proprietor: **KONISHIROKU PHOTO INDUSTRY
CO. LTD.
No. 26-2, Nishishinjuku 1-chome Shinjuku-ku
Tokyo 160 (JP)**

(72) Inventor: **Amano, Tadashi
911-11 Katakura-cho
Hachioji-shi Tokyo (JP)**

(74) Representative: **Gille, Christian, Dipl.-Ing. et al
Türk, Gille + Hrabal Patentanwälte Bruckner
Strasse 20
D-4000 Düsseldorf 13 (DE)**

## Description

The present invention relates to an image display system, and more particularly to an image display system intended for use in the visual diagnosis of requirements for the determination of print exposures in making prints from the images on a photographic film.

In the first place, printing from a color negative film will be explained below:

Generally speaking, an image plane of a color negative film has light and shade distribution, and the distribution of colors with blue, green and red densities differs according to various parts of the image plane, and said image plane is not necessarily considered to have been obtained by an appropriate exposure of the negative film, so that in the printing process, print exposures should be controlled according to the requirements for the negative film to be printed.

In most cases, however, color-balanced and print exposure-well-controlled color printing operations are practiced by keeping constant the transmission light quantities of the three color components blue, green and red in the entire area of an image. This is based on an empirical rule that the three-color average reflectance obtained by integrating the entire scene is nearly constant in usual photographed scenes. Those skilled in the art call this "the gray integration printing method". Namely, when a normal, neutral subject is photographed on a color negative film, the large area transmittance density varies according to over- or under-exposure, the quality of a light source used in photographing, the sensitivities of the blue-, green- and red-sensitive layers of the color negative film, the presence of a mask, and the like, and such variations are automatically controlled by keeping the exposures of blue, green and red lights constant at the time of the printing exposure operation.

In contrast to this, the change in the three colors of a color negative image caused due to the different distribution of the colors of a subject, since it leads to the change in the areal three-color component ratio of the subject, is of such a nature as not to be automatically corrected by the conventionally practiced method as aforementioned.

The change in the densities of a negative film occurs when the light-shade composition is extremely abnormal compared with normal light-shade distributions such as when the highlight area is extremely large or small as compared with normal scenes; for example, if a majority of the area of a scene is composed of shades or of highlights, this results in an areal change in the densities of a subject. In that case, therefore, printing cannot be compensated by the conventional method that controls the printing merely according to the large area transmittance density. In addition, in case when a principal subject is composed of extreme shadows or of extreme highlights as compared with other subjects surrounding the principal subject, correct printing cannot be obtained, either, because the set condition of the printer differs largely from the composition of such a scene.

Among the skilled in the art, the result obtained by photographing such a scene as to produce a color-unbalanced print is called "color failure", while the result obtained by photographing such a scene as to produce an unsatisfactory density-having print is called "density failure". Frequencies of the occurrence of such failures, although they vary according to seasons, are said to be around 5% for the color failure and from 30 to 40% for the density failure. For automatic correction of the color failure, the lowered correction method, etc., has been adopted and made a practical reality.

For automatic correction of the density failure, there has been proposed a method which is such that principal part of an image is finely divided into parts among which the highest density-having part is selected as one that represents the principal subject, and the functional relation between the highest density and the peripheral densities is used to determine a correcting quantity, and another method for determining a printing density by positionally weighing.

At present time, in printing by use of these probability procedures, the gray integration printing method produces 30 to 40% defective prints, and even the automatic negative judgement method wherein a negative image is finely divided into parts whose densities are used to determine a print exposure produces 5 to 10% defective prints. Besides, aside from such defective prints, there are a few percent prints that are not allowed to be shipped because they are such faulty images as unexposed frame, blurred image, out-of-focus image, and the like.

Faulty image prints, if found before shipping and shipping thereof is stopped, lead only to the loss of photographic paper. However, defective prints are usually reprinted and shipped. The reprinting operation process comprises finding defective prints, looking for the original negatives of the defective prints to conduct the reprinting thereof, and, thereafter, inserting the processed reprints into the preceding group of prints. Even if there is only one defective print, the lot of prints to which the print belongs is not allowed to be shipped, so that the printing operation process becomes largely confused. Furthermore, the reprinting operation, because of the above-described procedures, requires enormous time and labor as compared to the first printing operation process.

For this reason, measures are taken to prevent the occurrence of defective prints. The most generally adopted measure is that a skilled operator is stationed at the printer (exposure section), and he checks one image after another of negative films to change print exposure for negative films that are likely to produce defective prints. For example, since an image having a principal subject (such as a portrait) as a highlight area surrounded with a dark area as in a strobes- copic scene tends to produce a flat-toned print in the gray integration printing method for the reason described above, the operator perceives the dark area and the density of the principal subject to classify the negative image to thereby determine an appropriate print exposure according to his experience. And in case of an image in which colors vary in such a scene as of a red carpet, the gray integration printing method renders the entire area neutral-toned, so that the color of the red carpet cannot be reproduced as really red in a printed image. In that case, the operator changes the print exposure balance of red, green, and blue lights on the basis of his experience to thereby produce a print.

To enable such a printing control, an ordinary printer is provided with keys each having exposure change range of visible density from 20 to 10%. The operator has to find out which key should be selected from the keys in order to produce a satisfactory print, and on the basis of his experience, the operator makes key selections in the routine printing process. As the operator becomes most skillful in the operation of the printer, he becomes able to reduce the rate of defective prints to a few percent. As means to effectively employ these skilled operators, the judgement of negative film image qualities is provided independently of the printer, and according to the results of the judgement, unmanned automatic operations of the printer may be carried out — this has been made a practical reality. Further, in order to minimize the loss of prints likely to be produced as a result of the determination of print exposures by use of the earlier-mentioned scanned densities, a measure is taken to have the operator judge negative image qualities in advance in the stage prior to the printer operation. These measures required skilled operators if the image quality judgement is made visually frame by frame with estimation by the operator for automatically controlled results in the printer.

On the other hand, exposure-determining devices which employ a video system are practically used. A typical example of such devices is a device having a flying spot scanner as light source which scans the entire area of a negative film image to photoelectrically detect the change in the quantity of light corresponding to the densities of the negative image, and the photoelectric signals are reversed to thereby reproduce a positive image on a CRT screen. The observer, viewing the positive image on the CRT screen, if the image is darker on the whole, changes and controls the quantity of the light of the flying spot scanner so as to reproduce a visually satisfactory image. The value obtained by controlling the quantity of light is used as the quantity of light for use in the printing process (EP—A—54 848). The same principle may be applied to both color and black-and-white printing processes. This has been used in the determination of print exposures for making professional prints (large format prints), but the acceptable ranges of the independent judgement of each frame image and of the color adjustment and luminance adjustment of the CRT screen image, because the human eye becomes adapted to the CRT screen image, become wider so that the operator must be more skillful to be able to adjust the level to correspond with the print exposure. The judgement of image qualities frame by frame requires enormous time, so that it is not adopted in making prints for general users.

For color correction in connection with a color printer an image display system for visual judgement of images in the form of a color video monitor is known which enables observation of images having the same color and density as those of color images which will be printed. Manual information input means are provided to enable the observer to input correction factors if visual judgement came to the conclusion that correction is necessary. Such correction data are memorized. The manual input device is provided with input keys for indicating the desired correction and the image to which the desired correction is to be made. Thus, correction data of the principle subject of an image are obtained only on visual judgement so that the correction factor input in many cases is not absolutely correct, even though the observer is skilled in determining correct print exposures (JP—A—56—62 243).

Furthermore, this known image display system provides judgement of the observed images only in color while judgement independent of color balance is not possible so that this known system can be used in a satisfactory manner only by a skilled operator.

It is the object of the present invention to provide an image display system which is free of the above-described disadvantages and which requires no skilled operator for the determination of print exposures.

This object of the present invention is accomplished by the features of claim 1. Improvements of the invention are subject of the sub-claims.

By an image display system comprising a display means for a plurality of images in different positions, an observation means for said images, an image designation means for an image in the images, and a memory means for an information of the designated image defects of images can be corrected by corresponding adjustment of the printing exposure.

A primary feature of the present invention is to display a plurality of images on a display screen; that is, it is not that each of the images successively photographed on a film is displayed one by one on the screen but that a plurality of images are displayed together to be observed on a single display screen, whereby:

(a) the extent of the adaptation of the human eye to the screen image caused by observing frame by frame can be reduced by the comparative observation of a number of images, thus enabling the observer to readily find a defective image from among the plural number of images, and

(b) the probability of producing defective prints in the integrating neutral process is from 30 to 40% as has been mentioned earlier, whereas the probability of producing defective prints in the printer by use of the scanned densities is not more than 10%.

Instantly finding a defective image from among a number of images is much easier than in observing frame by frame, and all what is needed to be done is to take action on the defective frame, so that the operation may be easily carried out.

A second feature of the present invention comprises means to designate the observed defective image from a plurality of displayed images, to provide the visually judged information on the images, to cause the defective image to correspond with the visually judged information on the defective image, and to memorize the information on the corresponding relation.

In the drawings

Figure 1 shows a long photographic film roll,

Figure 2 shows an example of the display system of the present invention, and

Figure 3 shows a block diagram of an example of the display system of the present invention.

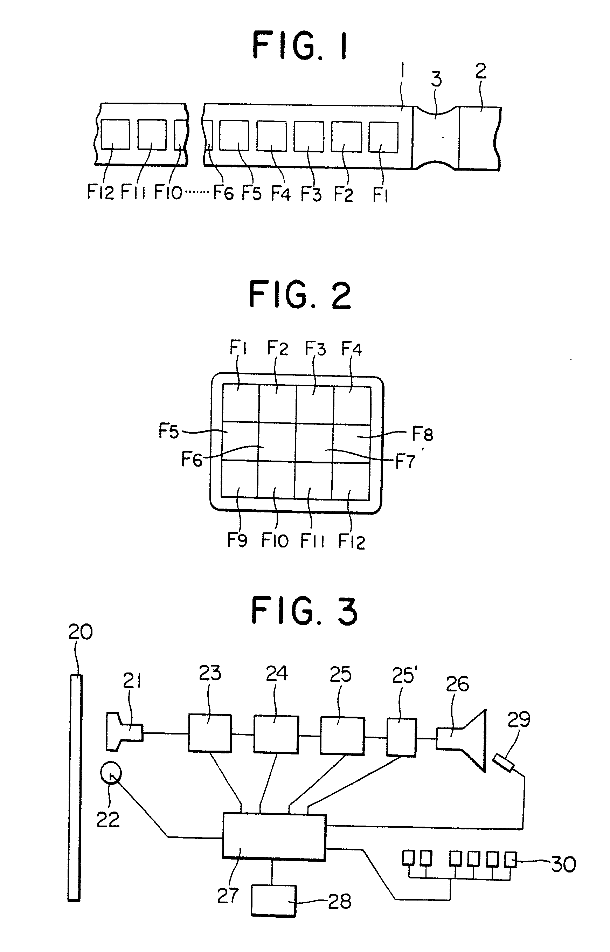

Figure 1 shows a photographic film for general use in which images are photographed in a long row wherein from F1 to F2 image frame numbers on a film are arbitrarily designated from the leading end thereof. In the photographic process, it is customary to connect a number of films one after another by pieces of an adhesive tape into one long roll to be processed. In the drawings, one film 1 is connected with another film 2 by an adhesive tape 3.

Figure 2 shows that twelve of the above images are represented on the display, and the operator may observe the images on the display.

Figure 3 shows an example of the present invention. In this figure, numeral 20 is a film in the long strip form in which, for example, such images as shown in Figure 1 are formed in succession. A video camera 21 scans images coming successively into the visual field and transmits the video signal through an image processing circuit 23. In the image processing circuit 23, an image reproduction level is set to the condition which is to be determined according to parameters such as the negative-to-positive reversal, and the quantities of transmission light detected by a detector 22.

If the quantity of the transmission light through the detector 22 is controlled to be constant to image frames F1 to F12 of the negative film, the reproduction system in the integrating neutral process is completed, and if the print exposure information by the density scanning is fed so as to correspond to each image into the system, the print reproduction system in the system can be observed.

Further, it is possible to set the image reproduction level by using the image video signal itself; that is, the video signal for one image being integrated, a signal proportional to the transmission light at the detector 22 can be obtained, printing information by the density scanning according to each portion (position) of the image is processed, the reproduction level is then determined, and the images can be observed.

The system of Figure 3 comprises an external information input-output circuit 27 which is connected to the detector 22, a manual information input section 30, an external memory 28 and a light pen 29 for feeding a reproduction level control signal, such as the average quantity of light to each image, into the image processing circuit 23. An image-processed signal from image processing circuit 23 is memorized in an A/D converter 24 and in a memory circuit 25. The memory circuit 25 is also connected with the external information input-output circuit 27, and the foregoing signal is memorized in the in-advance-designated memory address.

Thus, the images that have come in succession into the camera field are sequentially memorized in the memory circuit 25, and when the specified number of images (12 images in this example) has been memorized, the memorized images are transferred to an auxiliary memory 25'.

The output from the auxiliary memory 25' is scanned overall to be displayed on a CRT display screen 26, which can be observed in the matrix form as shown in Figure 2. Light pen 29 is intended for use in pointing an image out of the images displayed on the CRT screen, and the image position designated by the external information input-output circuit 27 can be judged automatically. To the judged image such visual information on the image faults as blur, empty frame, and the like, or on the light and shade is provided by depressing key buttons 30 to thereby memorize the combined information in the external memory 28.

In accordance with the memorized information, a judgement is made on whether the defective image should not be printed or the image defective in the light and shade should be printed with changing the control of the printing, but the problem of such controls is out of the scope of the present invention, so that details of it are omitted herein.

Explained above is an example wherein images are lined up in a row in the single roll form, but it is also possible to take several rolls of images with a plurality of video cameras to display a plurality of images on a single CRT screen for observation. Such an application is suitable for the integrated data processing in the printing operation.

As has been described above, the print exposure determination with use of scanned densities produces a few percent defective prints, the probability of making defective prints is concentrated in those negatives whose transmission densities are extremely high or low, subjects whose contrast is extremely high or low, and negatives whose blue-green-red transmission light quantity balance is largely unbalanced. In negative films image frames producing defective prints account for 20 to 30% in the whole. The above characteristics may be readily characterized by a simple photometric technics, that is, it is possible to select a group of images having a high probability to produce satisfactory prints by measurement of the average densities of negatives and of the highest and lowest densities of images.

If such a selection is made, the human judgement can be minimized not by displaying all images but by displaying the group of negatives highly likely to produce defective prints, and this manner is especially desirable for synchronous observation. In general observation of negative films, a negative film is observed under a given quantity of light (tungsten light or fluorescent light), while it requires a high skill to select the defective prints from among those printed by a transmission light quantity-controlled printer. If, however, the image reproduction level is varied independently according to each transmission light quality to make the transmission light quantity constant, then the results can be very easily observed, thereby enabling to estimate without any skill whether resulting prints would be too dark or too washy. Determination of printing according to scanned densities is so complex that it is impossible to make prejudgement without knowing the judgement theory. However, observation of images with changed reproduction level of the image according to the printing condition determining quantities by the scanned densities can exactly determine defective prints and whether prints to be produced would be too dark or too washy, without knowing the printing condition determining formula on the basis of scanned densities and to estimate positively.

Although the image display, whether positive or negative, may be basically accepted by the observer, it is considered easier for those unskilled to observe the positive image display. Further, if a color image display is used, both the color balance and the light and shade can be perceived. However, generally speaking, it is very difficult to judge the color balance condition on a CRT display, and particularly it takes time for those unskilled to judge the condition, while, on the other hand, in case of color printing process, it is very easy to conduct an automatic control of the color balance according to the red-green-blue transmission light quantity ratio of a negative film. As means for this there are known the lowered correction, and the like, which are well-known to those skilled in the art.

However, if variation of color balance of negative film, which is exposed imagewise in tungsten light (or fluorescent light) without using any artificial light such as flash exposure, is controlled automatically according to the ratio of transmission light quantities, the defective print is produced from the negative film. As an applied example of the present invention, an image is reproduced with black-and-white-toned luminance on the display, and the operator judges only the luminance (the light and shade of the image). In this manner, the observer can easily judge the image independent of the color balance. The color balance information is displayed on the CRT screen with frame marking surrounding an image that is characterized to be of an artificial light by the blue, green, and red light transmission densities thereof. An image of a scene which tends to be mistaken for what has been photographied in artificial light, particularly in tungsten light, is an image having a yellow area-dominant scene, and in fluorescent light, is an image of a scene which is mostly occupied by trees with green leaves. Namely, tungsten light has high energy in the red region, while fluorescent light has high energy in the green region, so that an artificial-light scene can be easily characterized by the proportion of blue, green and red light quantities.

In most scenes, it is very rare to find those objects that reflect the same energy distribution as that of tungsten light, but there is a large number of scenes containing objects that reflect equivalent energy distribution to that of fluorescent light. It is very easy to judge whether to accept or reject an image obtained by displaying on the CRT screen which has been taken with artificial light; that is, judgement can be made on whether to accept or reject images taken with artificial light from the proportion of blue, green and red light quantities as well as from the commonsense point of view that artificial light is used indoors where there exist no subjects having large surface areas with overall uniform luminance and where artificial-light scenes are non-tree and non-grass scenes.

Thus, the reproduced image is displayed as luminant reproduced (black-and-white) image, the observer observes only the light and shade of the luminant reproduced image, which is characterized from the blue, green and red light quantities displayed together with the luminant reproduced image, whereby the observer is easily able to find a defective image likely to produce a defective print. Thus, this is a very effective application example of the present invention. The light-and-shade information has been explained as means to provide a criterion for the judgement of an image, but key buttons 30 in Figure 3 are means designed to enable to obtain a reproduction level changing signal, to designate an independent image on display, to change the reproduction level independently, and to memorize the visually reproduction level, which is also an applied example of the present invention.

The visual information has been explained as means to characterize the whole defective nature of an image such as an insufficient light-and-shade balance, faulty image, etc., but the subsequent application example of the present invention is a method for the designation of a principal subject by the observer.

In Figure 3, the position of a principal object of the image displayed on the CRT display detected automatically by the light pen 29, and this position is digitalized and supplied to the density scanning type printer. Consequently, print exposure is determined on information relating to the density of the principal object. The judgement according to scanned densities tends to cause a faulty evaluation such as in a rear-light scene because a principal object can be misjudged as a highlight portion, or by other errors, because no principal object is in the center of an image, but the supply of information on the position of a principal object makes possible the highly accurate determination of the printing conditions.

The characteristics including applied examples have been described above, but the present invention is such that a plurality of images are displayed on a single CRT screen to thereby minimize the adaptation of the observer's eye thereto and, besides, the screen size is such as to render the movement of the eye fall under an appropriate angular range to thereby minimize the fatigue of the observer. In addition, the comparative observation system enables the observer to increase the accuracy of his judgement, and on the other hand, the use of an image display system having means to designate a defective image from among the plurality of images observed herein, and memory means to memorize the information on the designated defective image corresponding to the printing information thereof enables to prevent the production of defective prints as well as to eliminate the labor of reprinting operations.

The present invention is very useful for photographic printing processes and may also be applied to black-and-white printing.

## Claims

1. Image display system for visual judgement of images (F) on an observation means for said images, said observation means displaying a plurality of said images (F) in different positions on a display screen (26), the system including automatic processing means (23, 24), manual information input means (30) for inputting data, resulting from visual judgement of said images, to control said automatic processing means, further including a memory means (24, 25) for the inputted data and means for identifying the position of the images among the plurality of displayed images for which data input is required, characterized in that a light pen (29) is provided in order to identify the position of such an image on said display screen (26), and the position of a principal subject within such an image.

2. The system of claim 1, characterized in that said light pen (29) and said manual information input means (30) and the memory means (24, 25) are connected to an information input-output circuit (27) being connected to an external memory (28) for memorizing the data of images being satisfactory on visual judgement and feeding a reproduction level control signal into an image processing circuit (24, 25).

3. The system of claim 1 or 2, characterized in that it comprises a means (30) for changing, continuously or by steps, the light and shade and/or color balance of said identified image (F) independently.

4. The system of claim 3, characterized in that the colored images can be displayed as black-and-white images.

5. The system of any one of claims 1 to 4, characterized in that it further comprises a means for reproducing images (F) from a photographic film (1; 2) in grid matrix form on said display screen (26).

6. The system of any one of claims 1 to 4, characterized in that it comprises a means for reproducing images (F) from different photographic films (F) on said display screen (26).

7. The system of any one of claims 1 to 6, characterized in that it comprises an image reversing circuit for converting negative images to positive images.

8. The system of any one of claims 1 to 7, characterized in that it comprises a means for only displaying on said screen (26) images (F) having a high likelihood for producing defective prints as the information for visual judgement of image (F).

9. Method of displaying images for visual judgement on an observation means for said images, said observation means displaying a plurality of said images in different positions on a display screen, the method including automatic processing, manual information inputting for inputting data, resulting from visual judgement of said images, to control said automatic processing, and identifying the position of the images among the plurality of displayed images for which data inputting is required, characterized by identifying the position of the image on the display screen and the position of the principal subject within a displayed image by means of a light pen.

## Patentansprüche

1. Bilddarstellungssystem für die visuelle Beurteilung von Bildern (F) auf einer Betrachtungsvorrichtung für diese Bilder, auf der eine Vielzahl dieser Bilder (F) in verschiedenen Positionen auf einem Bildschirm (26) gezeigt werden kann, wobei das System automatische Aufbereitungsmittel (23, 24), manuelle Informationseingabemittel (30) für Daten aufweist, die aus der visuellen Beurteilung der Bilder resultieren, um die automatischen Aufbereitungsmittel zu steuern, und das weiterhin Speichermittel (24, 25) für die eingegebenen Daten enthält, sowie Mittel für die Identifizierung der Position der einzelnen Bilder unter der Vielzahl von dargestellten Bildern, für die eine Dateneingabe erforderlich ist, dadurch gekennzeichnet, dass ein Leuchtstift (29) vorgesehen ist, um die Position eines solchen Bildes auf dem Bildschirm (26) und die Position eines wesentlichen Gegenstandes in einem solchen Bild zu identifizieren.

2. Bilddarstellungssystem nach Anspruch 1, dadurch gekennzeichnet, dass der Leuchtstift (29), das manuelle Informationseingabemittel (30) und die Speichervorrichtung (24, 25) an einen Kreis (27) für die Eingabe und Abgabe von Informationen angeschlossen ist, der an einen externen Speicher (28) für die Speicherung der Daten von Bildern angeschlossen ist, die bei der visuellen Beurteilung als zufriedenstellend erscheinen, und der ein Steuersignal für einen Reproduktionsqualitätsgrad in einen Kreis (24, 25) für Bildaufbereitung eingibt.

3. Bilddarstellungssystem nach Anspruch 1 oder 2, dadurch gekennzeichnet, dass es eine Vorrichtung (30) aufweist, um kontinuierlich oder stufenweise Licht und Schatten und/oder die Farbeinstellung des identifizierten Bildes (F) unabhängig zu ändern.

4. Bilddarstellungssystem nach Anspruch 3, dadurch gekennzeichnet, dass die Farbbilder als Schwarz-Weiss-Bilder dargestellt werden können.

5. Bilddarstellungssystem nach einem der Ansprüche 1 bis 4, dadurch gekennzeichnet, dass es weiterhin eine Vorrichtung für die Wiedergabe von Bildern (F) von einem Film (1; 2) in der Form einer Gittermatrix auf dem Bildschirm (26) aufweist.

6. Bilddarstellungssystem nach einem der Ansprüche 1 bis 4, dadurch gekennzeichnet, dass es eine Vorrichtung für die Wiedergabe von Bildern (F) aus verschiedenen Filmen auf dem Bildschirm (26) aufweist.

7. Bilddarstellungssystem nach einem der Ansprüche 1 bis 6, dadurch gekennzeichnet, dass es einen Bildumkehrkreis aufweist, um Negativbilder in Positivbilder umzuwandeln.

8. Bilddarstellungssystem nach einem der Ansprüche 1 bis 7, dadurch gekennzeichnet, dass es eine Vorrichtung aufweist, um auf dem Bildschirm (26) nur solche Bilder (F) zu zeigen, bei denen eine hohe Wahrscheinlichkeit besteht, dass sie fehlerhafte Ausdrucke als Information für die visuelle Beurteilung des Bildes (F) zeigen.

9. Verfahren für die Darstellung von Bildern für visuelle Beurteilung auf einer Betrachtungsvorrichtung für diese Bilder, die eine Vielzahl dieser Bilder in verschiedenen Positionen auf einem Bildschirm zeigt, und das eine automatische Aufbereitungsvorrichtung aufweist, sowie eine manuelle Informationseingabe für Eingabedaten enthält, die sich aus der visuellen Beurteilung der Bilder ergeben, um die automatische Aufbereitung zu steuern und die die Position der Bilder unter der Vielzahl der Bilder identifizieren, für die eine Dateneingabe erforderlich ist, dadurch gekennzeichnet, dass die Position des Bildes auf dem Bildschirm und die Position des wesentlichen Gegenstandes innerhalb eines gezeigten Bildes mit einem Leuchtstift identifiziert wird.

## Revendications

1. Système d'affichage d'image pour une estimation visuelle d'images (F) sur un moyen d'observation des images, ce moyen d'observation affichant une pluralité d'images (F) à différentes positions sur un écran d'affichage (26), le système comprenant des moyens de traitement automatique (23, 24), des moyens d'introduction manuelle d'informations (30) pour introduire des données, résultant de l'estimation visuelle des images, pour commander les moyens de traitement automatique, comprenant en outre un moyen de mémoire (24, 25) pour les données introduites et des moyens pour identifier la position des images parmi la pluralité d'images affichées pour lesquelles l'introduction des données est requise, caractérisé en ce qu'un photostyle (29) est prévu pour identifier la position d'une telle image sur l'écran d'affichage (26) et la position d'un sujet principal dans une telle image.

2. Système selon la revendication 1, caractérisé en ce que le photostyle (29) et les moyens d'introduction manuelle d'informations (30) et le moyen de mémoire (24, 25) sont connectés à un circuit d'entrée/sortie d'informations (27) connecté à une mémoire externe (28) pour mémoriser les données d'image satisfaisante sur la base de l'estimation visuelle et fournir un signal de commande de niveau de reproduction dans un circuit de traitement d'image (24, 25).

3. Système selon l'une des revendications 1 ou 2, caractérisé en ce qu'il comprend un moyen (30) pour modifier, continûment ou par étapes, le niveau de gris et/ou l'équilibrage de couleur de l'image (F) identifiée, de façon indépendante.

4. Système selon la revendication 3, caractérisé en ce que les images colorées peuvent être affichées sous forme d'image en noir et blanc.

5. Système selon l'une quelconque des revendications 1 à 4, caractérisé en ce qu'il comprend en outre un moyen pour reproduire des images (F) à partir d'un film photographique (1; 2) selon une matrice en forme de grille sur l'écran d'affichage (26).

6. Système selon l'une quelconque des revendications 1 à 4, caractérisé en ce qu'il comprend un moyen pour reproduire des images (F) à partir de films photographiques différents sur l'écran d'affichage (26).

7. Système selon l'une quelconque des revendications 1 à 6, caractérisé en ce qu'il comprend un circuit d'inversion d'image pour convertir des images négatives en images positives.

8. Système selon l'une quelconque des revendications 1 à 7, caractérisé en ce qu'il comprend un moyen pour afficher sur l'écran (26) seulement des images (F) présentant une forte probabilité de produire des développements défectueux en tant qu'information pour l'estimation visuelle de l'image (F).

9. Procédé d'affichage d'images pour une estimation visuelle sur un moyen d'observation des images, ce moyen d'observation affichant une pluralité d'images à différentes positions sur un écran d'affichage, ce procédé comprenant un traitement automatique, une introduction manuelle d'information pour introduire des données, résultant de l'estimation visuelle des images, pour commander le traitement automatique et l'identification de la position des images parmi la pluralité des images affichées pour lesquelles une introduction de données est requise, caractérisé par l'identification de la position de l'image sur l'écran d'affichage et la position du sujet principal à l'intérieur d'une image affichée au moyen d'un photostyle.

# FIG. 1

F12 F11 F10 ...... F6 F5 F4 F3 F2 F1

# FIG. 2

# FIG. 3